(19) Europäisches Patentamt
European Patent Office
Office européen des brevets

(11) **EP 3 923 247 A1**

(12) **EUROPEAN PATENT APPLICATION**

(43) Date of publication:
**15.12.2021 Bulletin 2021/50**

(51) Int Cl.:
*G06T 19/00* (2011.01)    *G01C 21/00* (2006.01)

(21) Application number: **21178478.0**

(22) Date of filing: **09.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2020 US 202063037372 P**
**10.12.2020 US 202017117924**

(71) Applicant: **HERE Global B.V.**
**5611 ZT Eindhoven (NL)**

(72) Inventor: **BEAUREPAIRE, Jerome**
**10715 Berlin (DE)**

(74) Representative: **Potter Clarkson**
**The Belgrave Centre**
**Talbot Street**
**Nottingham NG1 5GG (GB)**

(54) **METHOD, APPARATUS, AND SYSTEM FOR PROJECTING AUGMENTED REALITY NAVIGATION CUES ON USER-SELECTED SURFACES**

(57)    An approach is provided for providing an AR overlay using pre-selected surfaces. The approach involves, for example, determining an input specifying pre-selection of a surface on which to present an augmented reality overlay. The augmented reality overlay includes navigation guidance information. The approach also involves processing image data to identify one or more surface candidates. The one or more surface candidates are one or more instances of the surface depicted in the image data. The approach further involves providing data for rendering the augmented reality overlay on at least one of the one or more surface candidates in a user interface displaying the image data, thereby presenting the navigation guidance information in accordance with the pre-selection of the surface.

FIG. 4

400

401 — PRE-SELECT A SURFACE TO PRESENT AN AUGMENTED REALITY OVERLAY

403 — PROCESS IMAGE DATA TO IDENTIFY ONE OR MORE SURFACE CANDIDATES

405 — PROVIDE DATA FOR RENDERING AUGMENTED REALITY OVERLAY ON AT LEAST ONE OF THE SURFACE CANDIDATES IN A USER INTERFACE DISPLAYING THE IMAGE DATA

EP 3 923 247 A1

**Description**

RELATED APPLICATION

This application claims priority from U.S. Provisional Application Serial No. 63/037,372, entitled "METHOD, APPARATUS, AND SYSTEM FOR PROJECTING AUGMENTED REALITY NAVIGATION CUES ON USER-SELECTED SURFACES," filed on June 10, 2020, the contents of which are hereby incorporated herein in their entirety by this reference.

BACKGROUND

Location-based service providers (e.g., mapping and navigation service providers) are continually challenged to provide compelling services and applications. One area of development relates to providing navigation guidance and/or other mapping-related information using augmented reality (AR) that, e.g., presents information as an overlay onto a captured view of a surrounding area. AR-based user interfaces enable users to quickly view the information in relation to actual features, objects, etc. visible in the environment. However, AR experiences can quickly become distracting to a user if the information is poorly positioned within the user's field of view. Accordingly, service providers face significant technical challenges with respect to creating user-tailored experiences in AR which are not intrusive to users. provide an AR overlay using pre-selected surfaces

SOME EXAMPLE EMBODIMENTS

Therefore, there is a need for an approach for providing a personalized non-intrusive augmented reality (AR) overlay (e.g., for presenting navigation cues or other equivalent data).

According to one embodiment, a method comprises determining an input specifying pre-selection of a surface on which to present an AR overlay. The AR overlay includes, for instance, navigation guidance information. The method also comprises processing image data to identify one or more surface candidates. The one or more surface candidates are one or more instances of the surface depicted in the image data. The method further comprises providing data for rendering the augmented reality overlay on at least one of the one or more surface candidates in a user interface displaying the image data, thereby presenting the navigation guidance information in accordance with the pre-selection of the surface.

According to another embodiment, an apparatus comprises at least one processor, and at least one memory including computer program code for one or more computer programs, the at least one memory and the computer program code configured to, with the at least one processor, cause, at least in part, the apparatus to determine an input specifying pre-selection of a surface on which to present an AR overlay. The AR overlay includes, for instance, navigation guidance information. The apparatus is also caused to process image data to identify one or more surface candidates. The one or more surface candidates are one or more instances of the surface depicted in the image data. The apparatus is further caused to provide data for rendering the AR overlay on at least one of the one or more surface candidates in a user interface displaying the image data, thereby presenting the navigation guidance information in accordance with the pre-selection of the surface.

According to another embodiment, a non-transitory computer-readable storage medium carries one or more sequences of one or more instructions which, when executed by one or more processors, cause, at least in part, an apparatus to determine an input specifying pre-selection of a surface on which to present an AR overlay. The AR overlay includes, for instance, navigation guidance information. The apparatus is also caused to process image data to identify one or more surface candidates. The one or more surface candidates are one or more instances of the surface depicted in the image data. The apparatus is further caused to provide data for rendering the AR overlay on at least one of the one or more surface candidates in a user interface displaying the image data, thereby presenting the navigation guidance information in accordance with the pre-selection of the surface.

According to another embodiment, an apparatus comprises means for determining an input specifying pre-selection of a surface on which to present an AR overlay. The AR overlay includes, for instance, navigation guidance information. The apparatus also comprises means for processing image data to identify one or more surface candidates. The one or more surface candidates are one or more instances of the surface depicted in the image data. The apparatus further comprises means for providing data for rendering the AR overlay on at least one of the one or more surface candidates in a user interface displaying the image data, thereby presenting the navigation guidance information in accordance with the pre-selection of the surface.

The following numbered paragraphs are disclosed:

    1. A method comprising:

determining an input specifying pre-selection of a surface on which to present an augmented reality overlay, the augmented reality overlay including navigation guidance information; processing image data to identify one or more surface candidates, the one or more surface candidates being one or more instances of the surface depicted in the image data; and providing data for rendering the augmented reality overlay on at least one of the one or more surface candidates in a user interface displaying the image data, thereby presenting the navigation guidance information in accordance with the pre-selection of the surface.

2. The method of paragraph 1, further comprising: determining an optimal timing for the presentation of the augmented reality overlay based on a timing of the input, a travel speed, relevance of the at least one of the one or more surface candidates to the navigation guidance information, or a combination thereof; and initiating the rendering of the augmented reality overlay on the at least one of the one or more surface candidates based on the optimal timing.

3. The method of paragraph 1, further comprising:

determining that the one or more surface candidates of the surface is not available in the image data; and selecting from one or more other surface candidates of a secondary surface that is depicted in the image data to present the navigation guidance information.

4. The method of paragraph 1, further comprising ranking the one or more candidate surfaces based on at least one of:

a proximity of the one or more candidate surfaces; dimensions of the one or more candidates surfaces; an angle of vision of the one or more candidate surfaces from a camera perspective of the image data; a line of sight to the one or more candidate surfaces from the camera perspective of the image data; one or more obstructions; or an anticipated duration of a presentation of the augmented reality overlay, wherein the at least one of the one or more surface candidates is selected to render the augmented reality overlay based on the ranking.

5. The method of paragraph 1, wherein the image data is captured during movement, the method further comprising: repeating the processing of the image data to identify the one or more surface candidates surfaces, the selecting of the at least one of the one or more surface candidates, or a combination thereof based on a designated frequency.

6. The method of paragraph 5, wherein the designated frequency is based on a travel speed, a detected context, or a combination thereof.

7. The method of paragraph 1, wherein a presentation of the augmented reality overlay on the at least one of the one or more surface candidates spans a designated duration based on a proximity trigger.

8. The method of paragraph 7, wherein the designated duration is based on a detected acknowledgement of the augmented reality overlay.

9. The method of paragraph 8, wherein the detected acknowledgement is based on gaze tracking data.

10. The method of paragraph 1, wherein the at least one of the one or more surface candidates is an anchor point for presenting the augmented reality overlay, and wherein the augmented reality overlay spans a plurality of surfaces with respect to the anchor point.

11. The method of paragraph 4, further comprising:

determining data indicating missed information from the augmented reality overlay rendered on the at least one of the one or more surface candidates, wherein the at least one of the one or more surface candidates is re-selected based on the data indicating missed information.

12. The method of paragraph 1, wherein the rendering of the augmented reality overlay is a visual representation of the navigation guidance information anchored to the at least one of the one or more surface candidates, a spatial audio representation of the navigation guidance information originating from the at least one of the one or more surface candidates, or a combination thereof.

13. The method of paragraph 1, wherein the one or more candidate surfaces are identified based on an image segmentation performed by a computer vision system.

14. The method of paragraph 1, further comprising:
adapting a rendering characteristic of the augmented reality overlay based on the at least one of the one or more surface candidates.

15. An apparatus for providing a comparative analysis of a navigation route comprising:

at least one processor; and
at least one memory including computer program code for one or more programs,
the at least one memory and the computer program code configured to, with the at least one processor, cause the apparatus to perform at least the following,

determine an input specifying pre-selection of a surface on which to present an augmented reality overlay, the augmented reality overlay including navigation guidance information;
process image data to identify one or more surface candidates, the one or more surface candidates being one or more instances of the surface depicted in the image data; and
provide data for rendering the augmented reality overlay on at least one of the one or more surface candidates in a user interface displaying the image data, thereby presenting the navigation guidance information in accordance with the pre-selection of the surface.

16. The apparatus of paragraph 15, wherein the apparatus is further caused to:

determine an optimal timing for the presentation of the augmented reality overlay based on a timing of the input, a travel speed, relevance of the at least one of the one or more surface candidates to the navigation guidance information, or a combination thereof; and initiate the rendering of the augmented reality overlay on the at least one of the one or more
surface candidates based on the optimal timing.

17. The apparatus of paragraph 15, wherein the apparatus is further caused to:
rank the one or more candidate surfaces based on at least one of:

a proximity of the one or more candidate surfaces;
dimensions of the one or more candidates surfaces;
an angle of vision of the one or more candidate surfaces from a camera perspective of the image data;
a line of sight to the one or more candidate surfaces from the camera perspective of the image data;
one or more obstructions; or
an anticipated duration of a presentation of the augmented reality overlay,
wherein the at least one of the one or more surface candidates is selected to render the augmented reality overlay based on the ranking.

18. A non-transitory computer-readable storage medium for providing a comparative analysis of a navigation route, carrying one or more sequences of one or more instructions which, when executed by one or more processors, cause an apparatus to at least perform the following steps:

determining an input specifying pre-selection of a surface on which to present an augmented reality overlay, the augmented reality overlay including navigation guidance information;
processing image data to identify one or more surface candidates, the one or more surface candidates being one or more instances of the surface depicted in the image data; and
providing data for rendering the augmented reality overlay on at least one of the one or more surface candidates in a user interface displaying the image data, thereby presenting the navigation guidance information in accordance with the pre-selection of the surface.

19. The non-transitory computer-readable storage medium of paragraph 18, wherein the apparatus is further caused to perform:

determining an optimal timing for the presentation of the augmented reality overlay based on a timing of the input, a travel speed, relevance of the at least one of the one or more surface candidates to the navigation guidance information, or a combination thereof; and

initiating the rendering of the augmented reality overlay on the at least one of the one or more surface candidates based on the optimal timing.

20. The non-transitory computer-readable storage medium of paragraph 19, wherein the apparatus is further caused to perform:
ranking the one or more candidate surfaces based on at least one of:

a proximity of the one or more candidate surfaces;

dimensions of the one or more candidates surfaces;

an angle of vision of the one or more candidate surfaces from a camera perspective of the image data;

a line of sight to the one or more candidate surfaces from the camera perspective of the image data;

one or more obstructions; or

an anticipated duration of a presentation of the augmented reality overlay,

wherein the at least one of the one or more surface candidates is selected to render the augmented reality overlay based on the ranking.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures

# EP 3 923 247 A1

of the accompanying drawings:

FIG. 1 is a diagram of a system capable of providing an augmented reality (AR) overlay using pre-selected surfaces, according to example embodiment(s);

FIG. 2 is a flowchart of a process for providing an AR overlay using pre-selected surfaces, according to example embodiment(s);

FIG. 3 is a diagram of the components of an AR platform capable of providing an AR overlay using pre-selected surfaces, according to example embodiments);

FIG. 4 is a flowchart of a process for providing an AR overlay using pre-selected surfaces, according to example embodiment(s);

FIGs. 5A through 5D are processing diagrams for providing an AR overlay using pre-selected surfaces, according to example embodiments);

FIGs. 6A through 6C are diagrams of example user interfaces overlaid with non-intrusive augmented reality navigation guidance, according to example embodiment(s);

FIG. 7 is a diagram of a geographic database, according to example embodiments);

FIG. 8 is a diagram of hardware that can be used to implement example embodiment(s);

FIG. 9 is a diagram of a chip set that can be used to implement example embodiment(s); and

FIG. 10 is a diagram of a mobile terminal (e.g., handset or vehicle or part thereof) that can be used to implement example embodiments).

## DESCRIPTION OF SOME EMBODIMENTS

Examples of a method, apparatus, and computer program for providing an augmented reality (AR) overlay based on pre-selected surfaces are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

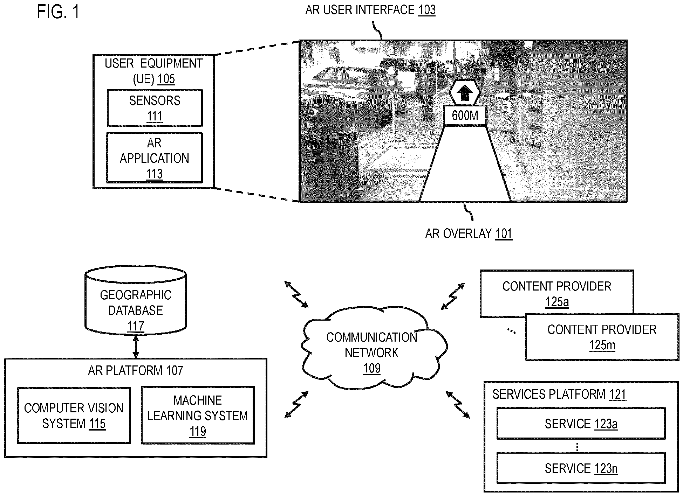

FIG. 1 is a diagram of a system capable of providing an AR overlay using pre-selected surfaces, according to example embodiments). As described above, providing navigation support to users is a key function for map service providers. Current navigation systems can provide route guidance (e.g., via a mobile device, an embedded navigation system, etc.) to enable a user to travel between locations (e.g., origin, destination, and/or waypoints) via various means or modes of transportation (e.g., walking, biking, vehicles, public transportation, etc.).

Some of these navigation systems also provide navigation guidance information using augmented reality overlays on smartphones, smart-glasses, or other screens, such that the users can see augmented reality directions laid on top of, for example, a live street view. The augmented reality directions not only change as the user turns around and/or moves, but also pinpoint more precise locations of a turn, a destination, etc. For example, the augmented reality directions can show which side of the street to walk on, which corner of a crossroad that a destination is located, etc., that are absent from transitional navigation systems.

However, these augmented reality navigation systems often surface the same navigation guidance information as icons (e.g., turn arrows, POI icons, etc.), popups (e.g., street names), or the like at predetermined positions on the screens in the same manner for all users, without considering individual needs and contexts of different users. As such, some users may feel these icons/popups are intrusive. For example, the icons/popups may occupy a big screen area in a live view of smart glasses, thus block objects of interest (e.g., a restaurant sign, a parking sign, etc.) in the live view, etc. Other users may feel these icons/popups are distracting. For example, a user may stare at a live view with augmented reality directions overlaid on a smartphone, but fail to pay attention to an uneven sidewalk surface, an incoming pedestrian/vehicle, etc.

To address these technical problems, a system 100 of FIG. 1 introduces a capability to provide an AR overlay using pre-selected surfaces, according to example embodiments). In one embodiment, the system 100 allows users to

6

visualize AR overlays on top of the surface of their choice by specifying manually or by voice which surfaces the system 100 should project onto.

In one embodiment, the system 100 enables a user to pre-select a surface (for example, a sidewalk surface) as a default type of surface to project an AR overlay 101 of navigation guidance on an live image depicted on an user interface 103 of an user equipment (UE) 105, hence the user anticipates the presentation of navigation guidance on such type of surfaces. As the navigation overlays will only be rendered on surfaces selected by users, the user is mentally prepared for the presentation of augmented reality navigation guidance information on such surfaces, which is less intrusive, less distracting than other augmented reality navigation systems.

In addition, by knowing where the AR navigation guidance information will be overlaid, the user can decide to focus her/his gaze on such surfaces or disregard them for the time being. In one embodiment, the user can use her/his gaze to actively request (e.g., to "Pull") this AR navigation guidance information to be projected.

Moreover, it is up to the user to decide whether and when to direct her/his gaze towards such surfaces to perceive the navigation guidance information overlaid thereon. As such the user has full discretion to receive or disregard the navigation guidance information, instead of it being forced upon (e.g., a "Push" mode) by the existing augmented reality navigation systems.

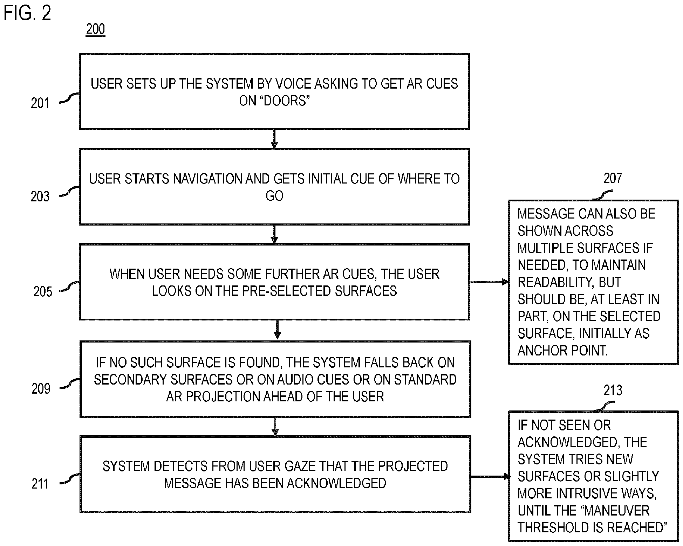

In an illustrative example use case 200 depicted in FIG. 2, a user sets up the system 100 via a voice command "Get AR cues on doors" in step 201. As the user starts navigation (e.g., by opening a navigation application on the UE 105 to determine an optimal route), the system 100 can project initial AR cues on at least one door surface in the user interface 103 of the UE 105 in step 203. To determine where (which door surface(s)) and when ("optimal timing") AR cues should be surfaced to the user, the system 100 checks whether any visible door surfaces in the field of view are available for sufficiently long time to project the AR cues thereon based on the route, a travel speed, etc. The optimal timing to render an AR cue refers to when the AR cue should be displayed and for how long (i.e., "rendering duration") so that the AR cue can be conveyed to the user.

In this case, the system 100 determines door surface candidates within a live image of the UE 105, ranks the door surface candidates using one or more ranking algorithms based on one or more ranking criteria, and projects initial AR cues on one or some of the highly ranked door surface candidates depicted in the live image to guide the user. The ranking criteria may include dimensions of the surface candidates, the proximity of the surface candidates to an user interface 103 (e.g., of a smart phone, smart glasses, heads-up-display (HUD), etc.), an angle of vision from a perspective of the user interface 103, a line of sight from a perspective of the user interface 103, potential obstructions of surface candidates, safety, privacy, and other risks of projecting on the surface candidates, an estimated duration of a surface candidate (e.g. a parked bus) staying at a location, an anticipated projection duration in relation to a travel speed of the user interface, etc.

This surface determining, ranking and AR overlaying process may be repeated periodically (e.g., every second), on demand, etc. based on the user's travel speed and the context around the user, as the user continues the route. Whenever the user needs further AR cues, the user can look for more AR cues on the pre-selected surfaces (e.g., door surfaces) in the live image of the UE 105 in step 205.

The AR cues can also be shown across multiple door surfaces if needed, to maintain readability. The AR cues should be, at least in part, overlaid on the selected door surface, initially as an anchor point in step 207. In one embodiment, the highest ranked door surface is selected to project the AR cues onto. In one instance, if the system 100 determines more door surfaces are required to project the AR cues, the system 100 can project at least a part of the key AR cue on the highest ranked door surface, and the remaining AR cues on other top ranked door surfaces.

However, in some instances, when the system 100 is unable to find any door surfaces in the live image (i.e., the pre-selected surfaces are missed form the live image), the system 100 can fall back on secondary surfaces (such as building surfaces, sidewalk surfaces, etc.), audio cues, standard AR projections, etc. to render the AR cues in step 209. By way of example, a 3D audio cue can be a spatial audio representation of the navigation guidance information (e.g., turn right after 100 m") as if originating from the at least one of the one or more surface candidates (e.g., Instance 511a). In another instance, the user may pre-select audio cues as a preferred format over the AR overlays.

The system 100 and/or the user can define the duration of the AR cues. In one embodiment, the duration may be a max number of seconds after a proximity trigger (e.g., when the user physically passes the door surface overlaid with the AR cues). In one embodiment, the duration may be a max number of seconds based on some visual acknowledgment by the user (e.g., when the user has seen the AR cue). For example, the system 100 may terminate projecting an AR overlay on a respective door surface in the live image upon detecting the user's gaze at the door surface and/or the user's gaze moving away from the door surface (a "Pull" mode) in step 211. There may be other forms of acknowledgement (e.g., voice, gesture, etc.). In one embodiment, the system 100 applies a fading effect to make the AR overlay gently disappear after the set seconds, instead of disappearing sharply.

However, when no acknowledgement is detected, the system 100 may project the AR overlay on another door surface or in a slightly more intrusive way (e.g., increasing the size of the AR overlay to go over the respective door surface), etc., until a maneuver threshold (e.g., a physical acknowledgement, a physical movement threshold, etc.) is reached in step 213. By way of example, the physical movement threshold may be that the user physically passes by the door in the real world.

In addition, the user may use a gaze to actively select a surface for projecting AR navigation guidance information (a "Pull" mode). In another embodiment, the system 100 uses the user selected surface (e.g., the building door surface selected via a touch screen) as an anchor point for projecting AR overlays, and the system 100 determines whether all the navigation information can be delivered on the selected surface or whether some additional adjacent surfaces need to be leveraged as well. If additional adjacent surfaces are required, the system 100 can use the anchor point as the center for projecting the navigation information as one more AR navigation cues across multiple building door surfaces, for example, to maintain readability. In another embodiment, the system 100 selects the highest-ranked building door surface candidate as an anchor point for overlaying the AR navigation information in conjunction with one or more neighboring surface candidates.

As such, the user can look for navigation guidance at door surfaces in the live image at the user's discretion along the route. In one embodiment, the system 100 continues updating the AR cues by repeating the determining, ranking, and AR overlaying process until the user reaches a destination.

In one embodiment, the system 100 of FIG. 1 may include the UE 105 (e.g., a mobile device, a smartphone, etc.) having connectivity to an AR platform 107 via the communication network 109. In one embodiment, the UE 105 includes one or more device sensors 111a-111n (also collectively referred to herein as device sensors 111) (e.g., global position system (GPS) sensors, inertial measurement units (IMUs), barometer, light sensors, etc.) and one or more applications (e.g., an AR application 113, a navigation application, a mapping application, etc.). In one instance, the UE 105 (e.g., a mobile device) and/or the AR application 113 can enable a user to request AR cues to guide the user to a selected destination (e.g., a parking garage).

In another embodiment, the UE 105 is a heads-up-display (HUD) system added-on or built-in a vehicle (e.g., standard vehicles, autonomous vehicles, highly-automated driving (HAD) vehicles, semi-autonomous vehicles, etc.). In one embodiment, the vehicle may include one or more vehicle sensors (e.g., GPS sensors, etc.) functioning similar to the sensors 111, and the vehicle has connectivity to the AR platform 107 via the communication network 109.

In one embodiment, the system 100 projects the AR overlay 101 (e.g., via the AR platform 107 and/or the AR application 113) onto the user interface 103 of the UE 105. The AR overlay 101 may be a graphic indicia (e.g., traffic and/or directional symbols such as turn, stop, etc., such as a straight arrow sign in a hexagon box), a textual description or explanation of the navigation guidance along an route (e.g., "500 m" in a rectangular box), etc. In one embodiment, the system 100 adapts the color, texture, size of the AR overlay 101 based on the color, size, and other restriction of the respective surface (e.g., a sidewalk surface) it is projected on, to ensure the AR overlay 101 is visible and/or readable. The information of the color, size, and other restriction of the surface may be extracted by the computer vision algorithms (e.g., using a computer vision system 115 of the AR platform 107), and/or imported from 3D map data of a geographic database 117. In another embodiment, the system 100 can render the description or explanation in an audible form as if originated from the respective surface (e.g., "go straight for 500 meters").

In one embodiment, the system 100 also determines whether to project other information types, such as tourist information, reminders, SMS/messages/tweets, weather, next departure timing for public transport, etc., based on a user's mobility history, calendar, etc., and ranks the surface candidates further based on the information types. By way of example, the system 100 can project AR overlays of different information types on the same type of surfaces (e.g., advertisement billboard surfaces). In another embodiment, the system 100 can project AR overlays of different information types onto different types of surfaces as determined by the system 100 or the user. For example, the system 100 can rank all advertisement billboard surfaces in a live image to project tourist information overlays, and rank all parked vehicle surfaces in the live image to project AR tourist information overlays. As another example, the system 100 can leverage available surfaces in autonomous vehicles to decide where to overlay some specific information that would be selected by the user, to project AR trip information, AR gamified experience, etc.

In short, the system 100 can uses data inputs of a starting location, a destination, user preferences (e.g., preferred surface(s), timing of the commands/cues, etc.), a travel route, a transport mode (e.g., a private vehicle, a shared vehicle, walking, public transport, etc.), historical travel data of the user (e.g., mobility graph/patterns, familiarity index, etc.), traffic data, user's calendar, other relevant contextual information, etc., to generate a dynamic list of ranked surface candidates to project AR cues thereon.

By way of example, a user selects a destination 3-km away that can be reached via a route that is partly familiar to the user and another part of the route which is less familiar. The user starts walking without the need of navigation guidance cues. However, as the user approaches the unfamiliar part of the route, the user starts hesitating and hence looks around for a surface (e.g., an advertisement billboard) where the user desires to project AR navigation overlays. In one embodiment, the system 100 recognizes this pattern of user behavior as seeking AR navigation overlays, and applies image segmentation on the live image on the user interface 103 of the UE 105 to identify a billboard surface candidate therein, hence overlays AR navigation cues, e.g., taking a right turn after waking 200 m, thereon. Meanwhile, the UE 105 gets an incoming call, so the system 100 rank all parked vehicle surfaces in the live image to project an AR overlay of an incoming call reminder.

The above-described embodiments can determine which pre-selected surface candidates can project AR cues onto, rank the surface candidates based on one or more ranking criteria, determine the optimal timing to project the AR cues on one or more highly ranked surface candidates based on the relevance of the AR cues, the timing of a user command for the AR cues, user's travel speed, etc. The user can pre-select the type of surface for overlaying the AR cues manually or by voice.

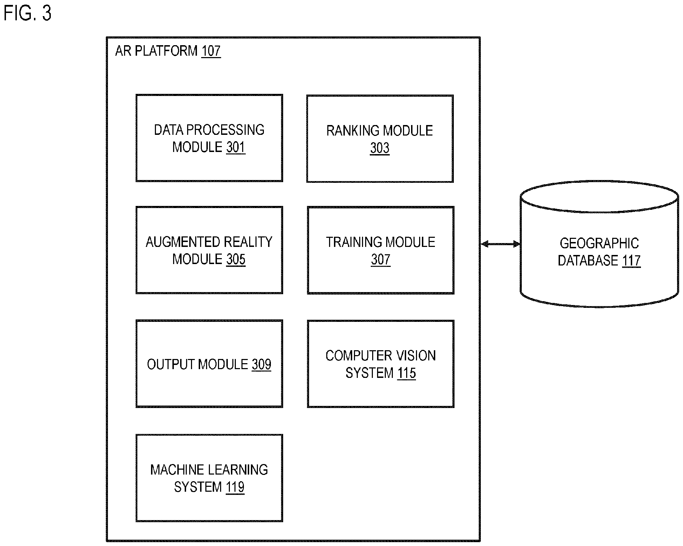

FIG. 3 is a diagram of the components of the AR platform 107, according to example embodiments). By way of example, the AR platform 107 includes one or more components for providing an AR overlay using pre-selected surfaces, according to the various embodiments described herein. It is contemplated that the functions of these components may be combined or performed by other components of equivalent functionality. In one embodiment, the AR platform 107 includes a data processing module 301, a ranking module 303, an augmented reality module 305, a training module 307, and an output module 309. In one embodiment, the AR platform 107 also has connectivity to the geographic database 117, the computer vision system 115, and the machine learning system 119. The above presented modules and components of the AR platform 107 can be implemented in hardware, firmware, software, or a combination thereof. Though depicted as a separate entity in FIG. 1, it is contemplated that the AR platform 107 may be implemented as a module of any other component of the system 100. In another embodiment, the AR platform 107 and/or the modules 301-309 may be implemented as a cloud-based service, local service, native application, or combination thereof. The functions of the AR platform 107, the modules 301-309, the computer vision system 115, and/or machine learning system 119 are discussed with respect to FIG. 3.

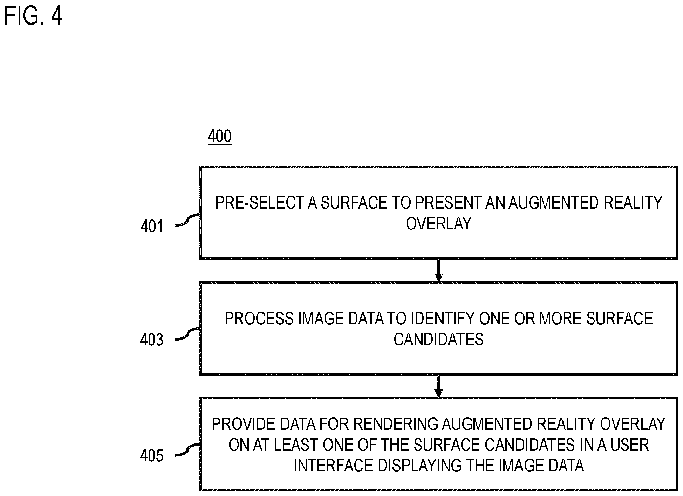

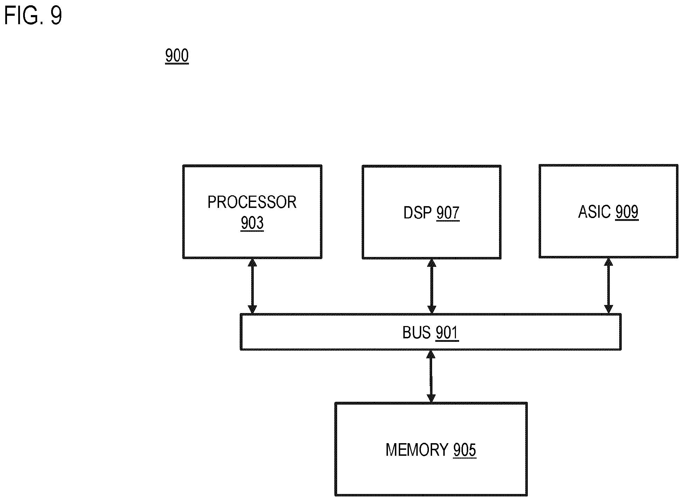

FIG. 4 is a flowchart of a process for providing an AR overlay using pre-selected surfaces, according to example embodiments). In various embodiments, the AR platform 107, the computer vision system 115, the machine learning system 119, and/or any of the modules 301-309 may perform one or more portions of the process 400 and may be implemented in, for instance, a chip set including a processor and a memory as shown in FIG. 9. As such, the AR platform 107, the computer vision system 115, the machine learning system 119, and/or the modules 301-309 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

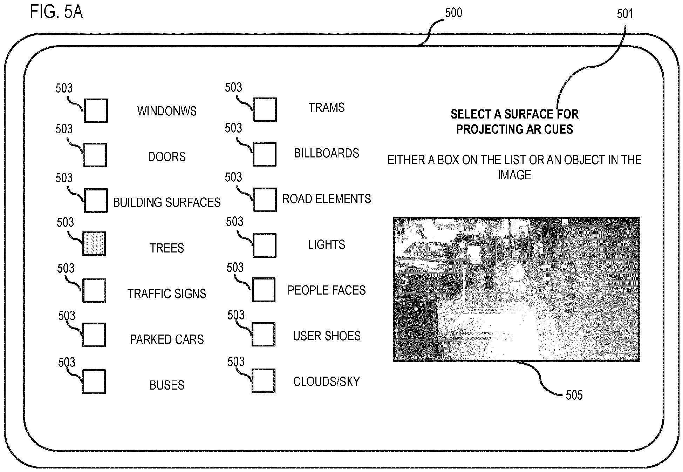

In one embodiment, in step 401, the data processing module 301 determines an input specifying pre-selection of a surface (of an object, e.g., a tree) on which to project an AR overlay. FIGs. 5A through 5D are processing diagrams for providing an AR overlay using pre-selected surfaces overlaid on surfaces of the type pre-selected in step 301, according to example embodiment(s).

In one embodiment, the AR overlay includes navigation guidance information. In this embodiment, the data processing module 301 can process user device sensor data to recognize navigation guidance seeking behaviors (e.g., parking search behaviors, walking direction behaviors such as pausing on the street, etc.), and prompt the user to select an object surface (e.g., from an object list, on a sample image depicting objects, etc.) for projecting AR navigation guidance information.

FIG. 5A is a diagram of an example user interface 500 for receiving user input(s), according to example embodiments). By way of example, the user interface 500 displays instructions 501 of "select a surface for project AR cues", and "either a box on the list or an object in the image." The user interface 500 also displays a list of object types 503 that may include windows, doors, building surfaces, trees, traffics signs, parked cars, buses, trams, billiards, road elements, lights, human faces, user shoes, clouds/sky, etc. The user interface 500 further displays an image 505 for the user select an object surface. By way of example, a box representing "trees" is selected in FIG. 5A.

In one embodiment, the user interface 500 for receiving user input(s) can be triggered when the user first time initiates the AR application 113. In another embodiment, the user interface 500 for receiving user input(s) can be triggered when the user activates the AR application 113, a navigation application, etc. on the UE 105. In yet another embodiment, the user interface 500 for receiving user input(s) can be triggered when the data processing module 301 processes data from the sensors 111 and determines that the user needs the AR overlay includes navigation guidance information.

In one instance, the data processing module 301 may receive the input specifying pre-selection of the surface (e.g., by a user) via the UE 105 or portion thereof such as a touch screen, a touchpad, a button/switch, an eye tracking mechanism (capturing a user gaze), speech recognition (capturing a voice comment), gesture recognition (capturing a user gesture), a brain-computer interface (capturing brain waves), etc.

FIGs. 5A through 5D are processing diagrams for providing an AR overlay using pre-selected surfaces overlaid on surfaces of the type pre-selected in step 301, according to example embodiments). In one embodiment, upon determining parking search behaviors based on sensor data from the vehicle, the data processing module 301 retrieves the nearest parking garage information from a database (e.g., the geographic database 117), thereby determining a parking location and generating navigation guidance information (e.g., directions to the nearest parking garage). In step 403, the data processing module 301 processes image data collected by image sensors of the vehicle to identify one or more surface candidates. The one or more surface candidates are one or more instances of the surface (e.g., of the tree) depicted in the image data.

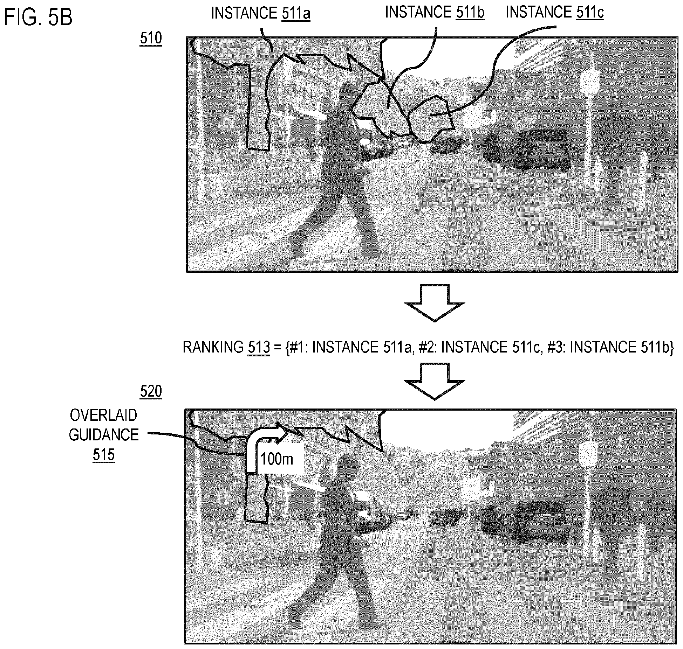

The data processing module 301 can use one or more computer vision algorithms (e.g., image segmentation, object recognition, etc.) to process the image data of a live preview on a user interface (e.g., a HUD, etc.) to identify surfaces depicted in the image data that are of the same type of surface that has been pre-selected by the user (e.g., a tree). FIG. 5B depicts a live image 510 that has been applied with computer vision algorithms, and an image 520 overlaid with AR navigation guidance. By way of example, the data processing module 301 can use an image segmentation algorithm to segment the image 510 into tree pixels, building pixels, door pixels, vehicle pixels, pedestrian pixels, etc. The data processing module 301 can then apply an object recognition algorithm to recognize the pixel groups as various visual objects of the image 510, such as trees, buildings, doors, vehicles, pedestrians, etc., thus identify tree surface instances 511a-511c for later ranking and overlaying processing. In addition, the data processing module 301 can determine the dimensions of the identified object surfaces in the image 510.

In FIG. 5B, the tree instances 511a-511c are highlighted in the image 510. In one embodiment, the data processing module 301 can execute image segmentation and object recognition functions locally. In another embodiment, the data processing module 301 out-sources the image segmentation and object recognition functions to the computer vision system 115.

Once the data processing module 301 determines the tree surface candidates and their dimensions in the image 510, the data processing module 301 can further retrieve from the database (e.g., the geographic database 117) high resolution or high definition (HD) mapping data that provide centimeter-level or better accuracy of map features of the identified objects (including the trees) in the image 510, to determine other ranking criteria, such as the proximity of the surface candidates to the user interface (e.g., the HUD), an angle of vision from a perspective of the user interface per surface candidate, a line of sight from a perspective of the user interface per surface candidate, potential obstructions of surface candidates, an anticipated projection duration in relation to a travel speed of the user interface surface candidate, safety, privacy, and other risks of projecting on the surface candidates, etc.

The data processing module 301 can then forward data of the surface candidates and data associated with their respective ranking criteria to the ranking module 303 to rank the surface candidates and determine which tree surface candidates of the image 510 to project the navigation guidance information (e.g., directions to the nearest parking garage) during what time duration with respect to the user location and/or movements.

Once the surface candidates are identified, the ranking module 303 can rank the one or more surface candidates based on the ranking criteria, and determine one or more of the surface candidates to overlay AR navigation information. By way of example, the ranking criteria may include the proximity of the surface candidates to the user interface (e.g., of a smart phone, smart glasses, a HUD, etc.), dimensions of the candidates surfaces, an angle of vision of the candidate surfaces from a camera perspective of the user interface, a line of sight to the candidate surfaces from a camera perspective of the user interface, potential obstructions of the surface candidates, safety, privacy, and other risks of projecting on the surface candidates, an estimated duration of a surface candidate (e.g., a parked bus) staying at a location, an anticipated projection duration in relation to a travel speed of the user interface, etc. This list of ranking criteria is provided by way of illustration and not as a limitation.

By way of example, with respect to the dimensions of the one or more candidate surfaces, the ranking module 303 may rank higher a building wall that occupies half of the block with a long surface for continuously projecting the AR overlay compared to the whole surface of the building wall, or at different sections of the building wall.

In one embodiment, the proximity of the surface candidates depends on a distance between the user interface and the surface candidates. For example, the smaller distances increase proximity of the surface candidates to the user interface. In one embodiment, the ranking module 303 ranks closer surface candidates higher for projecting navigation information.

In one instance, the dimensions of the surface candidates depicted in the user interface depend on the distance between the user interface and the surface candidates. The smaller distances increase the dimensions of the surface candidates depicted in the user interface. In one embodiment, the bigger surface candidates are ranked higher by the ranking module 303 for projecting navigation information. In one embodiment, the ranking module 303 ranks the surface candidates based on their relative dimensions in the image on the user interface which become bigger as the user gets closer to the surface candidates.

By way of example, the more the angle of vision of a candidate surface is aligned with a camera perspective of the user interface, the easier the candidate surface can be perceived by a user. In one embodiment, the ranking module 303 ranks higher the candidate surfaces that are more aligned with the camera perspective of the user interface.

Normal line of sight during walking is about 10 degrees downward from horizontal. The surface candidates seen in the user's foveal vision (direct line of sight) can be seen in detail. In one embodiment, the ranking module 303 works in conjunction with the data processing module 301 to determine the user's gaze and line of sight to rank the surface candidates for overlay of the AR navigation information accordingly. In one instance, the surface candidates closer to the user's foveal vision (direct line of sight) are ranked higher by the ranking module 303 for projecting AR navigation information.

Since some user interfaces are placed very close to user's eyes, the ranking module 303 also considers surface candidates in a user's peripheral vision. By way of example, the peripheral vision takes into account human eye rotation limitations, such as left and right from one's normal line of sight (e.g., 15 degrees), and upward and downward (e.g., 15 degrees). In one embodiment, the surface candidates in peripheral vision are ranked higher by the ranking module 303 for projecting secondary navigation information. In addition, the secondary navigation information may be projected by the augmented reality module 305 with bigger sizes and/or brighter colors of AR overlays for the user to easily perceive.

In one instance, the ranking module 303 can rank the surface candidates with higher probability of obstruction lower for projecting navigation information. In one embodiment, the ranking module 303 works in conjunction with the data processing module 301 to determine possible obstructions of candidate surfaces based on the line of sight and 3D building map data (e.g., stored in or accessed via the geographic database 117).

In another embodiment, the ranking module 303 determines possible obstructions of candidate surfaces based on location-based data, such as traffic, parking, weather, road work, protests, strikes, parades, etc. By way of examples, strikes may block building door surfaces with banners, foot traffic may block sidewalk surfaces, etc.

In some embodiments, the ranking module 303 can rank lower candidate surfaces based on factors such as safety, privacy, other risk concerns of projecting AR overlays thereon. For examples, projecting AR overlays on traffics signs or the user's own shoes can cause safety concerns, and projecting AR overlays on other people's faces or building windows may cause privacy concerns. Although the AR projections are on the user interface only visible to the user, the user may appear to stare at other peoples' faces or the building windows, thus causing potential privacy concerns. In this case, the ranking module 303 may discourage or avoid using such surface candidates.

In another embodiment, the ranking module 303 can rank higher surface candidates with a longer estimated duration staying at a location. For example, building elements and other permanent fixtures may be ranked higher than parked buss, parked buss may be ranked higher than a temporarily stopped bus, and the temporarily stopped bus may be ranked higher than the user's shoes.

In other embodiments, the ranking module 303 factors in the travel speed of the user interface when considering the other ranking criteria. Since the travel speed of the user interface changes the distance between the user interface and the surface candidates, the travel speed also affects such ranking criteria like the proximity of the surface candidates to the user interface, the dimensions of the surface candidates depicted in the user interface, the angle of vision from a perspective of the user interface, the line of sight from a perspective of the user interface, the potential obstructions of surface candidates, etc. In one embodiment, the faster the travel speed, the more frequently the ranking module 303 updates the ranking of surface candidates within an image or a field of view, and shortens a respective rendering duration (since the user passes by the surface candidates quicker).

When factoring in a travel speed, the ranking module 303 can rank surface candidates in consideration of optimal timing to render information (e.g., in the form of AR overlay 101s) over individual surface candidates. The term "optimal timing" refers to when the information should be displayed and for how long (i.e., "rendering duration") so that the information can be conveyed to the user.

For instance, the ranking module 303 can work in conjunction with the augmented reality module 305 to determine which surface candidates to project AR navigation guidance information that meet displaying criteria such as staying in the field of view for at least 7 seconds and/or a proximity trigger such as at least 100 meters before the vehicle reaches the parking garage based on a travel speed of the vehicle. In this instance, the faster the travel speed the further back in the field of view a surface candidate will be chosen to be able to remain in the field of view for the optimal timing (e.g., 100 meters from the garage) and duration. The ranking module 303 can down-rank a surface candidate that will appear in the live view in less time than a time period (e.g., 7 seconds) required to display the information.

When there is no tree surfaces available for the optimal timing, the augmented reality module 305 can shorten the rendering time (e.g., to 6 seconds) to fit the next best tree surface, or the ranking module 303 can consider a secondary surface (e.g., a building wall surface) that fits the optimal timing.

In the driving example, the individual rendering can be set by the augmented reality module 305 to start from a predetermined distance from a point of interest (e.g., a parking garage) based on a travel speed (e.g., 10 km per hour) and a transport mode of the user (e.g., the vehicle). For example, an AR turning overlay on a surface candidate (e.g., Instance 511a) may start when the garage is 100 meters away from the vehicle, and may end when the user passes the tree where overlaid guidance 515 is projected. Subsequently or overlappingly, another overlaid guidance with the same right turn arrow and a shorter distance (e.g., 50 m) is projected on another surface candidate (e.g., Instance 511b) as the vehicle drives close to the parking garage, after updated ranking and AR processing. In another embodiment, an individual rendering duration can be set as an average human attention span (e.g., 7 seconds for digital media).

In another example, an AR "exiting" or "exit ahead" overlay can be projected on a surface candidate (e.g., a billboard) starting when the vehicle is 3 km away from an highway driving at a speed (e.g., 70 km per hour), and may end when the vehicle passes the surface candidate. By analogy, the AR overlay can be updated on multiple surface candidates on the highway by the ranking module 303 working in conjunction with the augmented reality module 305 until the vehicle reaches the exit ramp.

In another embodiment, for each instance, the ranking module 303 can calculate a ranking score

$$R = \sum_{i=1}^{n} wi.Ci,$$ C represents a ranking criterion, and w represents a weighting factor adjusted based on the measuring units of the ranking criteria and heuristics. Taking Table 1 as an example, the ranking module 303 can determine Ranking 513 for the tree instances as {#1: Instance 511a, #2: Instance 511c, #3: Instance 511b} in image 510, and works in conjunction with the augmented reality module 305 to project overlaid guidance 515 onto an image 550 based on the ranking and timing considerations to be discussed later. The Instance 511a is the highest-ranked tree surface with a Ranking Score of 12, since Instance 511a is closer to the user interface (e.g., 30 meters away) yet far enough to project an AR overlay for 10.7 seconds (based on a vehicle travel speed of 10 km per hour), big enough (1/16 of the image area) to display visible AR overlay, wide enough angle of vision (60 degrees) to be viewed by the user comfortably, close enough to the line of sight of UI (45 degrees away from the UI line of sight), and no visual obstruction by other objects.

On the other hand, Instance 511b is the lowest-ranked tree surface with a Ranking Score of 4, since 40% its surface is visually obstructed by parked vehicles such that its size is relatively small (1/30 of the image area) to display visible AR overlay, and it is close to the line of sight of UI (10 degrees away from the UI line of sight) yet with a narrow angle of vision (20 degrees) to be viewed by the user comfortably, even though Instance 511b is far enough from the user interface (e.g., 90 meters away) to project an AR overlay for 32.1 seconds.

Table 1

| INSTANCE | 511a | 511b | 511c |
|---|---|---|---|
| Proximity to UI | -30 m | -90 m | -110 m |
| Dimensions | 1/16 | 1/30 | 1/32 |
| Angle of vision | 60 | 20 | 15 |
| Line of sight | -45 | -10 | 0 |
| Obstructions | 0 | 0.4 | 0.05 |
| Projection duration (sec) | 10.7 | 32.1 | 35.7 |
| R | 12 | 4 | 5 |

Alternatively or concurrently, the ranking module 303 may apply one or more spatial conditional filters for the surface candidates, such as within 100 m, only on the current route (i.e., not on other adjacent streets), only on surfaces tilted less than a threshold degree, etc. The filter of "within 100 m" can down-rank and/or temporarily exclude Instances 511c (i.e., being located 110 m away), but may include Instances 511c later when the vehicle moves closer to the parking garage). The filter of "only on the current route" can down-rank and/or temporarily exclude surface candidates on other adjacent streets that are invisible in the image 510 and should not be considered for AR overlay(s). The filter of "only on surfaces tilted less than a threshold degree" can down-rank and/or temporarily exclude surface candidates titled so much as to leave a projectable surface too narrow for AR overlay(s).

In another embodiment, the ranking module 303 can adopt mobile web display advertisement time duration to ensure the effectiveness of AR overlay(s), i.e., sufficiently display to the user considering user context, such as a travel speed, etc. The average/effective time span for a visual advertisement on a mobile web display is around 7 seconds. In this example, the parking lot is located 100 meters away on the right. When the vehicle moves at 10 km per hour, the vehicle can reach the parking lot in 36 seconds. The ranking module 303 can down-rank and/or temporarily exclude surface candidates that are within 20 meters of the user or camera position, since the vehicle will pass such surface in less than 7 seconds and the surface candidates will no longer be visible in the field of view. Thus, the down ranked and/or temporarily excluded surface candidate would not meet the requirements. In FIG. 5B, all three tree surface instances 511a-511c are more than 20 meters away from the user interface in the vehicle.

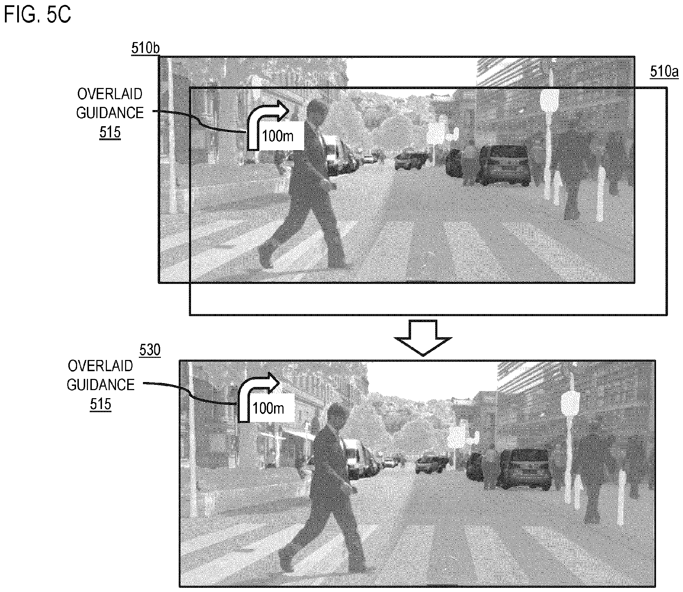

In another embodiment, the ranking module 303 can down-rank and/or temporarily exclude surface candidates with a size falling outside of a range of 1/8-1/16 of the screen. In this example, surface instances 511b, 511c are smaller than 1/16 of the screen, thereby being down-ranked and/or temporarily excluded from receiving AR overlays at this time; however, they can be reconsidered when the vehicle moves closer to the parking garage. Thereafter, the ranking module 303 can forward the data of Instance 511a and the parking direction information from the current location to the augmented reality module 305. The augmented reality module 305 can work in conjunction with the data processing module 301 to generate graphic and/or text indicia to visually convey the parking direction information from the current location. In step 405, the augmented reality module 305 provides data for rendering the augmented reality overlay (e.g., the graphic and/or text indicia) on at least one of the one or more surface candidates (e.g., Instance 511a) in a user interface displaying the image data, thereby presenting the navigation guidance information (e.g., "right turn after 100 m") in accordance with the pre-selection of the surface. Back to the same example, the augmented reality module 305 generates the overlaid guidance 515 including a right turn arrow icon and a text box of "100 m". FIG. 5C depicts an augmented reality overlaying process. In FIG. 5C, an AR overlay 510a with the overlaid guidance 515 is projected on top of the live image 510b resulting in the AR-overlaid image 530 that shows the overlaid guidance 515 over Instance 511a without its outline.

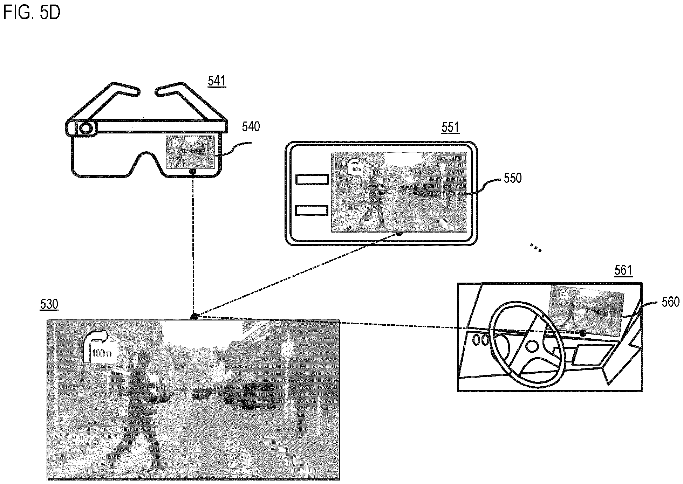

In one embodiment, the output module 309 outputs data for rendering the augmented reality overlay 420 on at least one surface candidate in a user interface displaying the image data. By way of examples, the AR-overlaid image 530 may be presented in the user interface 103 of the UE 105, such as an AR-overlaid image 540 on a pair of smart glasses 541, an AR-overlaid image 550 on a mobile phone 551, and/or an AR-overlaid image 560 in a HUD of an vehicle 561 as depicted in FIG. 5D.

In another embodiment, the output module 309 outputs data for rendering the augmented reality overlay to a see-through head-mounted display (HMD), after the augmented reality module 305 considers diffraction optics, holographic optics, polarized optics, reflective optics, etc. of the HMD when generating the AR rendering data.

In another embodiment, instead of image segmentation, the data processing module 301 uses sensor data from the UE 105 or a vehicle to determine a current location and orientation of the user interface, then retrieves 3D map data from the geographic database 117 that models the real world environment in the proximity of the user. Based on the 3D map data, the data processing module 301 can determine surface candidates in a live preview or a field of view that are of a pre-selected type (e.g., a building door). The image segmentation works in good light conditions, while the 3D map data works even with poor light conditions or in the dark.

Although various embodiments are described with respect to a walking mode or a driving mode, it is contemplated that the AR overlay approach described herein may be used with other modes of transport (e.g., public transport, etc.). By way of example, when riding on trains/subways, the output module 309 can output data for rendering the augmented reality overlay on one or more selected surfaces (e.g., walls, seats, floors of the subway train interior) to present relevant navigation guidance information such as when to exit and/or how many stops remain. As another example, the output module 309 can output data for rendering the augmented reality overlay of information related to points of interest, location-based entertainment/games, on some selected surfaces (e.g., interior windows, seats, etc.) in an autonomous vehicle, while considering safety implications.

In another embodiment, the ranking module 303 works in conjunction with the augmented reality module 305 to determine the optimal timing and/or duration of the AR overlay function based on the timing of the user input of the preferred surface (e.g., a building door), a starting point, a destination, a travel speed, etc. In one embodiment, the augmented reality module 305 initiates the AR overlay function as soon as the data processing module 301 determines the user input of the preferred surface, and then ends the AR overlay function on demand, after a time threshold without context changes (e.g., no input or user movements for a period of time), etc. In another embodiment, the augmented reality module 305 sets to start the AR overlay function after determining a starting point and a destination of the user, and then ends the AR overlay function on demand, upon reaching the destination, etc. In yet another embodiment, the augmented reality module 305 sets to start the AR overlay function as soon as determining a user movement, such as rotation, walking, driving, etc., and then ends the AR overlay function on demand, upon reaching the destination, etc.

New research reveals that younger generations can process information faster than previous generations, and transition from task to task more easily. Accordingly, the augmented reality module 305 can adjust the rendering duration based on a user's age. By way of example, for a user of age 20, the augmented reality module 305 shortens the AR overlay duration on a surface candidate such that it starts 400 feet away from the turn junction in a walking mode (e.g., 3 mile per hour), and ends when the user passes the surface candidate.

In another embodiment, the ranking module 303 works in conjunction with the augmented reality module 305 to determine the optimal timing and/or rendering durations to project AR overlays based on the relevance of the surface candidates to different information types to be overlaid, such as navigation guidance information, discovery or tourism information, friend finder information, games information, parking information, reminders, call alerts, SMS/messages/Tweets, notifications of SMS/messages/Tweets, weather, notification of next departure for public transport, retail/advertising information (e.g., based on user interests and/or requests), etc. For example, the ranking module 303 can determine in one instance that certain information types should be weighted relatively higher in connection with the surface candidate ranking (e.g., route guidance versus route weather).

By way of example, when the user is walking towards a landmark for sightseeing, the augmented reality module 305 can concurrently project navigation guidance to the landmark on the first two ranked building wall surfaces and the landmark information on the third ranked building wall surface on the route to the landmark. As another example, the augmented reality module 305 can project parking information on the 1st ranked surface candidate when detecting that a vehicle being driven by the user exhibits parking search behaviors (e.g., driving at lower speed next to a parked lane, going "in circles" around a central point, etc.).

In yet another embodiment, the ranking module 303 works in conjunction with the augmented reality module 305 to determine the optimal timing and/or rendering durations to project the AR overlays further based on other context information, such as a transport mode, historical travel data, traffic data, user preference/familiarity data with respect to the routes, user calendar, other context information etc. In one embodiment, the user preference and/or familiarity data is based on user inputs and/or historical travel data of the user (e.g., mobility graphs/patterns) that may be stored in or accessed via the geographic database 117. In another embodiment, the data processing module 301 determines a familiarity index level based on how frequently a user has traveled the current route or one or more portions thereof, and the ranking module 303 can determine the surface candidates along the route based at least in part on the familiarity index level. For example, When the use is travelling on a familiar route, the ranking module 303 can determine to project less detailed AR overlay(s), such as only a right turn arrow (without the "100 m" text), thus rank higher surface candidates with a size closer to the size requirement(s) for the right turn arrow. In addition, since the user will travel faster on the familiar route, the augmented reality module 305 can shorten a rendering duration for the AR overlay(s).

Once the user starts moving, the ranking module 303 updates the ranking of the surface candidates in the live image, and the augmented reality module 305 updates the AR overlays on demand, periodically (e.g., a predetermined frequency of every minute), continuously, based on triggers as discussed. The faster the travel speed, the ranking module 303 will rank and choose a surface further back in the field of view that can remain in the field of view for the optimal timing and duration discussed previously, and the augmented reality module 305 updates a respective AR overlay on a surface candidate earlier, and shortens a respective rendering duration (since the user passes by the surface candidate quicker).

The augmented reality module 305 may provide data for projecting 2D or 3D AR overlays on surface candidates using various projection techniques, such as parallel projection, perspective projection, etc. In terms of AR graphic indicia, the augmented reality module 305 may adopt widely recognized symbol signs or the like or design its own graphic indicia. Regarding AR text overlays, the augmented reality module 305 may adapt font sizes and colors based on user preferences, user vision, and sizes/resolutions of user interfaces/displays, etc. By way of example, the higher the resolution of a display, the more AR content can be overlaid thereon, e.g., smart glasses with a resolution of 1440 x 1600 can project more AR content than smart glasses with a resolution of 640 x 360.

In one embodiment, the output module 309 can output to the geographic database 117 the applicable ranking criteria, information types, and/or respective weights of ranking criteria and/or information types, weighting schemes, etc. corresponding to a user for future use and/or training of the machine learning system 119, to improve the speed and accuracy of the ranking and AR overlaying processes of the AR platform 107.

In one embodiment, the training module 307 in connection with the machine learning system 119 selects respective weights of the ranking criteria, information types, contextual attributes (e.g., a transport mode, a travel speed, historical travel data, traffic data, calendar data, etc. associated with the user), rendering timing attributes (including a rendering starting time, a rendering duration, a rendering end time, etc.), or a combination thereof (e.g., determined by the data processing module 301) tailored for the user. In one embodiment, the training module 307 can train the machine learning system 119 to select or assign respective weights, correlations, relationships, etc. among the ranking criteria, the information types, the contextual attributes, the rendering timing attributes, or a combination thereof, for ranking surface candidates and determining respective rendering content and timing. In one instance, the training module 307 can continuously provide and/or update a machine learning model (e.g., a support vector machine (SVM), neural network, decision tree, etc.) of the machine learning system 119 during training using, for instance, supervised deep convolution networks or equivalents. In other words, the training module 307 trains the machine learning model using the respective weights of the ranking criteria, the information types, the contextual attributes, the rendering timing attributes, or a combination thereof to most efficiently select the most relevant surface candidates to render most revenant information with optimal rendering timing.

In one embodiment, the training module 307 can improve the ranking and AR overlaying process using feedback loops based on, for example, user behavior and/or feedback data. In one embodiment, the training module 307 can improve a machine learning model for the ranking and AR overlaying process using user behavior and/or feedback data as training data. For example, the training module 307 can analyze AR usage patterns data, user AR acknowledged commands, user missed directions (e.g., turns) data, etc. to determine what AR overlays work best relative to a user. In one instance, the machine learning system 100 can then adapts itself to better serve the user by modifying, for example, color, texture, size of the visual cues based on user feedbacks.

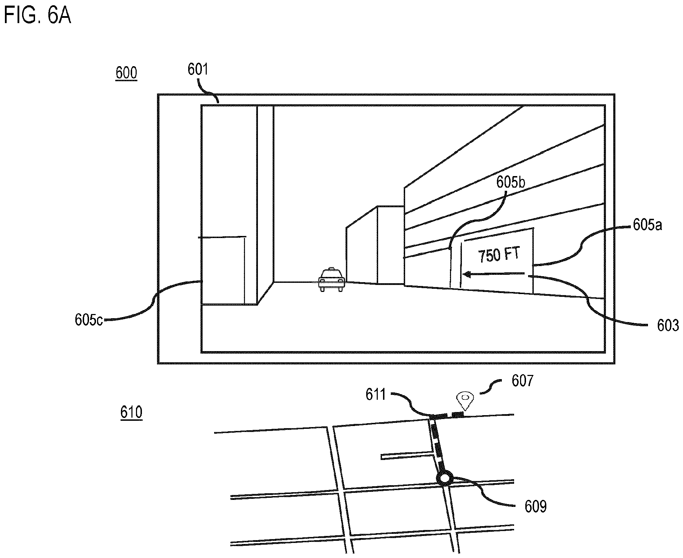

FIGs. 6A through 6C are diagrams of example user interfaces overlaid with non-intrusive augmented reality navigation guidance, according to example embodiment(s). Referring to FIG. 6A, in one embodiment, the system 100 generates a user interface (UI) 600 of a UE 105 (e.g., a mobile phone) that depicts non-intrusive augmented reality navigation guidance on a live image to guide a user to a destination. By way of example, the user stands on a street and starts the AR function by touching a building door in a live image 601 depicted on the user interface 600 of the UE 105. The system 100 determines surface candidates (e.g., 3 building doors 605a-605c) within a threshold size range (e.g., a visible yet non-intrusive size range of 1/32 to 1/16 of the display area) that would be covered by a current viewing angle and a line of sight of the user interface 600, and then ranks the surface candidates, for example, based on their respective sizes, proximity to the user interface 600, an angle of vision from a perspective of the user interface 600, a line of sight from the perspective of the user interface 600, potential obstructions of surface candidates, safety, privacy, and other risks of projecting on the surface candidates, an anticipated projection duration in relation to a travel speed of the user interface 600, etc.

The system 100 then overlays the AR overlays 603 including a straight arrow symbol and text of "750 feet" on a building door surface 605a, when the user is walking towards a destination 607 (e.g., a bank) from a current location 609 along a route 611 as shown in the corresponding 2D map 610 in FIG. 6A.

When the user interface 600 starts changing it positions (e.g., a walking mode, a driving/riding mode, etc.) and/or originations (e.g., a rotating mode), the system 100 can update the AR overlays 603 on demand, periodically (e.g., a predetermined frequency of every minute), or continuously. Alternatively or concurrently, the system 100 can update the AR overlays 603 based on triggers set by the user and/or the system 100, e.g., a proximity trigger (e.g., when the user interface is 750 feet away from a turn), the beginning and/or end of a rotation/movement, a travel speed threshold, user behavior (e.g., user pausing on the street with speed=0kph, user staring at something for more than a threshold time period, etc.), context changes (e.g., an appointment alert, a weather alter, a traffic accident, etc.), etc.

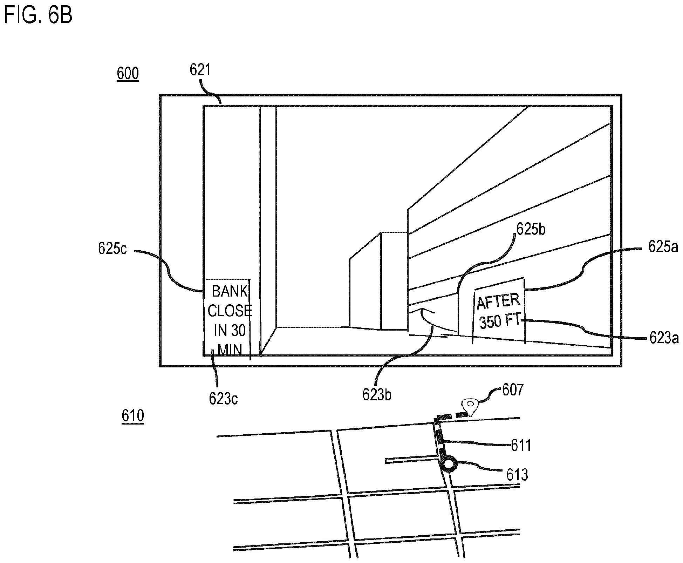

FIG. 6B shows a live image 621 depicted on the user interface 600 of the UE 105 with updated navigation guidance cues 623a-623c overlaid on building door surfaces 625a-625c using the same ranking and AR overlaying process as discussed with respect to FIG. 6A, when the user is walking closer to the destination 607. For example, the navigation guidance cue 623a includes text of "After 350 feet" on the building door surface 625a, the navigation guidance cue 623b includes a turn arrow symbol on the building door surface 625b, and the navigation guidance cue 623c includes text of "Bank close in 30 min" on the building door surface 625c, when the user arrives a location 613 along the route 611 towards the destination 607 as depicted in the corresponding 2D map 610 in FIG. 6B.

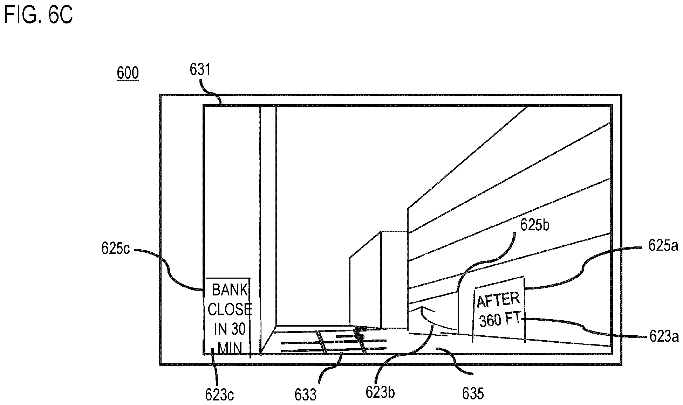

FIG. 6C shows a live image 631 depicted on the user interface 600 with one additional navigation guidance cue of the 2D map 633 overlaid on a street surface 635 following the same ranking and AR overlaying process, when the user requests to overlay the 2D map into the live image 631.

The above-described embodiments can personalize user experience of AR overlays (including AR guidance) that are less intrusive. The AR overlays are also safer (as less distracting), since the user can decide when to look at the visual cues. Since a surface type is pre-selected by a user for projecting AR overlays, the user knows where to "find" the AR overlays on a user interface. In addition, the above-described embodiments support Pull versus Push modes for a user to actively requesting AR overlays with a gaze.

Although various embodiments are described with respect to augmented reality, it is contemplated that the approach described herein may be used with other the context in virtual reality (VR) or the like. By way of example, a user can set up the system 100 to preview a route and/or navigation environment to project navigation cues on pre-selected surfaces during the preview (prior to the navigation, i.e., in a non-real-time manner). Similar to projecting AR overlays, the system 100 can project VR cues on at least one pre-selected surface (e.g., a tree) in the user interface 103 of the UE 105, considering a user's virtual speed for the optimal timing. The virtual speed can be selected by user via a user interface as a fixed speed or varied as the user manipulating the user interface such as moving a finger on a touch screen, dragging a mouse, etc. By analogy, the optimal timing to render an VR cue refers to when the VR cue should be displayed and for how long (i.e., "rendering duration") so that the VR cue can be conveyed to the user.

Returning to FIG. 1, in one embodiment, the UE 105 can be associated with any person (e.g., a pedestrian), any person driving or traveling within a vehicle, or with any vehicle (e.g., an embedded navigation system). By way of example, the UE 105 can be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, devices associated with one or more vehicles or any combination thereof, including the accessories and peripherals of these devices, or any combination thereof. It is also contemplated that a UE 105 can support any type of interface to the user (such as "wearable" circuitry, etc.). In one embodiment, the vehicle may have cellular or wireless fidelity (Wi-Fi) connection either through the inbuilt communication equipment or from a UE 105 associated with the vehicle. Also, the UE 105 may be configured to access the communication network 109 by way of any known or still developing communication protocols. In one embodiment, the UE 105 may include the AR platform 107 to provide an AR overlay using pre-selected surfaces.

In one embodiment, the UE 105 include device sensors 111 (e.g., GPS sensors, a front facing camera, a rear facing camera, multi-axial accelerometers, height sensors, tilt sensors, moisture sensors, pressure sensors, wireless network sensors, etc.) and applications (e.g., the AP application 113, mapping applications, navigation applications, shared vehicle booking or reservation applications, public transportation timetable applications, etc.). In one example embodiment, the GPS sensors can enable the UE 105 to obtain geographic coordinates from satellites for determining current or live location and time. Further, a user location within an area may be determined by a triangulation system such as A-GPS, Cell of Origin, or other location extrapolation technologies when cellular or network signals are available.

In one embodiment, the AR platform 107 performs the process for providing an AR overlay using pre-selected surfaces as discussed with respect to the various embodiments described herein. In one embodiment, the AR platform 107 can be a standalone server or a component of another device with connectivity to the communication network 109. For example, the component can be part of an edge computing network where remote computing devices (not shown) are installed along or within proximity of an intended destination (e.g., a city center).

In one embodiment, the machine learning system 119 of the AR platform 107 includes a neural network or other machine learning system to compare and/or score (e.g., iteratively) a user's historical routes (e.g., travels and/or journeys) against computed navigation routes and/or an optimal computed navigation route. For example, when the inputs are factors and attributes of the respective routes, the output can include a relative ranking or scoring computation as to whether a historical route is the most relevant route (or route segment) to reference for the route comparison analysis. In one embodiment, the machine learning system 119 can iteratively improve the speed by which the system 100 ranks a user's historical routes and/or the likelihood that a user will ultimately select the optimal navigation route to the selected destination. In one embodiment, the neural network of the machine learning system 119 is a traditional convolutional neural network which consists of multiple layers of collections of one or more neurons (which are configured to process a portion of an input data). In one embodiment, the machine learning system 119 also has connectivity or access over the communication network 109 to the geographic database 117 that can store labeled or marked features (e.g., applicable factors and attributes, questions, and/or corresponding information and data, etc.).

In one embodiment, the AR platform 107 has connectivity over the communications network 109 to the services platform 121 (e.g., an OEM platform) that provides one or more services 123a-123n (also collectively referred to herein as services 123) (e.g., navigation/routing services). By way of example, the services 123 may also be other third-party services and include mapping services, navigation services, traffic incident services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services platform 121 uses the output (e.g. route ranking data, mobility graph data, etc.) of the AR platform 107 to provide services such as navigation, mapping, other location-based services, etc.

In one embodiment, one or more content providers 125a-125n (also collectively referred to herein as content providers 125) may provide content or data (e.g., including road attributes, terrain data/topology, historical travel data for a user, health related information, weather, population models, traffic data, cellular coverage data, any relevant contextual information, etc.) to the UE 105, the AR platform 107, the applications (including AR application 113), the vehicle, the geographic database 117, the services platform 121, and the services 123. The content provided may be any type of content, such as map content, text-based content, audio content, video content, image content, etc. In one embodiment, the content providers 125 may provide content regarding movement of a UE 105, a vehicle, or a combination thereof on a digital map or link as well as content that may aid in localizing a user path or trajectory on a digital map or link (e.g., to assist with determining road attributes in connection with mobility history and travels). In one embodiment, the content providers 125 may also store content associated with the AR platform 107, the vehicle, the geographic database 117, the services platform 121, and/or the services 123. In another embodiment, the content providers 125 may manage access to a central repository of data, and offer a consistent, standard interface to data, such as a repository of the geographic database 117.

In one embodiment, as mentioned above, a UE 105 and/or a vehicle may be part of a probe-based system for collecting probe data for computing routes for all available transport modes and/or user historical routes. In one embodiment, each UE 105 and/or vehicle is configured to report probe data as probe points, which are individual data records collected at a point in time that records telemetry data for that point in time. In one embodiment, the probe ID can be permanent or valid for a certain period of time. In one embodiment, the probe ID is cycled, particularly for consumer-sourced data, to protect the privacy of the source.

In one embodiment, as previously stated, the vehicle is configured with various sensors (e.g., vehicle sensors) for generating or collecting probe data, sensor data, related geographic/map data (e.g., routing data), etc. In one embodiment, the sensed data represents sensor data associated with a geographic location or coordinates at which the sensor data was collected (e.g., a latitude and longitude pair). In one embodiment, the probe data (e.g., stored in or accessible via the geographic database 117) includes location probes collected by one or more vehicle sensors. By way of example, the vehicle sensors may include a RADAR system, a LiDAR system, global positioning sensor for gathering location data (e.g., GPS), a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data, an audio recorder for gathering audio data, velocity sensors mounted on a steering wheel of the vehicles, switch sensors for determining whether one or more vehicle switches are engaged, and the like. Though depicted as automobiles, it is contemplated the vehicles can be any type of private or shared manned or unmanned vehicle (e.g., cars, trucks, buses, vans, motorcycles, scooters, bicycles, drones, etc.) that travels through on road/off-road segments of a road network.

Other examples of sensors of the vehicle may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, vehicle sensors about the perimeter of the vehicle may detect the relative distance of the vehicle from a physical divider, a lane line of a link or roadway, the presence of other vehicles, pedestrians, traffic lights, potholes and any other objects, or a combination thereof. In one scenario, the vehicle sensors may detect weather data, traffic information, or a combination thereof. In one embodiment, the vehicle may include GPS or other satellite-based receivers to obtain geographic coordinates from satellites for determining current location and time. Further, the location can be determined by visual odometry, triangulation systems such as A-GPS, Cell of Origin, or other location extrapolation technologies.

In one embodiment, the UE 105 may also be configured with various sensors (e.g., device sensors 111) for acquiring and/or generating probe data and/or sensor data associated with a user, a vehicle (e.g., a driver or a passenger), other vehicles, conditions regarding the driving environment or roadway, etc. For example, such sensors 111 may be used as GPS receivers for interacting with the one or more satellites to determine and track the current speed, position and location of a user or a vehicle travelling along a link or on road/off road segment. In addition, the sensors 111 may gather tilt data (e.g., a degree of incline or decline of a vehicle during travel), motion data, light data, sound data, image data, weather data, temporal data and other data associated with the vehicle and/or UE 105. Still further, the sensors 111 may detect local or transient network and/or wireless signals, such as those transmitted by nearby devices during navigation along a roadway (Li-Fi, near field communication (NFC)) etc.

It is noted therefore that the above described data may be transmitted via the communication network 109 as probe data (e.g., GPS probe data) according to any known wireless communication protocols. For example, each UE 105, user, and/or the vehicle may be assigned a unique probe identifier (probe ID) for use in reporting or transmitting said probe data collected by the vehicles and/or UE 105. In one embodiment, each vehicle and/or UE 105 is configured to report probe data as probe points, which are individual data records collected at a point in time that records telemetry data.

In one embodiment, the AR platform 107 retrieves aggregated probe points gathered and/or generated by the device sensors 111 and/or vehicle sensors resulting from the travel of the UE 105 and/or vehicles on a road segment of a road network or an off segment of a digital map. In one instance, the geographic database 117 stores a plurality of probe points and/or trajectories generated by different UEs 105, device sensors 111, vehicles, vehicle sensors, etc. over a period while traveling in a large monitored area (e.g., on road and/or off road). A time sequence of probe points specifies a trajectory-i.e., a path traversed by a UE 105, a vehicle, etc. over the period.

In one embodiment, the communication network 109 of the system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

In one embodiment, the AR platform 107 may be a platform with multiple interconnected components. The AR platform 107 may include multiple servers, intelligent networking devices, computing devices, components, and corresponding software for providing parametric representations of lane lines. In addition, it is noted that the AR platform 107 may be a separate entity of the system 100, a part of the services platform 121, a part of the one or more services 123, or included within a vehicle (e.g., an embedded navigation system).

In one embodiment, the geographic database 117 can store information regarding a user's mobility history or travels (e.g., a mobility graph), historical mobility patterns, route ranking factors and attributes, corresponding information and data, weights and/or weighting schemes, labeled and/or marked features and attributes, user account information, user preferences, POI data (e.g., location data), etc. The information may be any of multiple types of information that can provide means for providing an AR overlay using pre-selected surfaces. In another embodiment, the geographic database 117 may be in a cloud and/or in a UE 105, a vehicle, or a combination thereof.

By way of example, the UE 105, AR platform 107, device sensors 111, the applications (including AR application 113), the vehicle, vehicle sensors, satellites, services platform 121, services 123, and/or content providers 125 communicate with each other and other components of the system 100 using well known, new or still developing protocols. In this context, a protocol includes a set of rules defining how the network nodes within the communication network 109 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

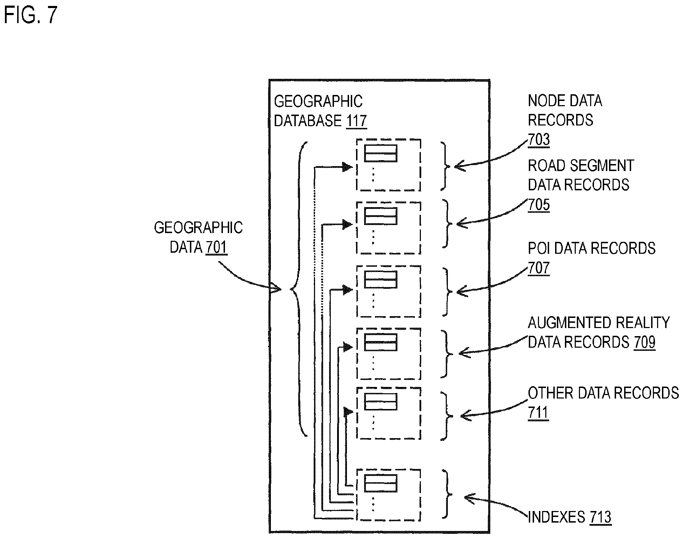

FIG. 7 is a diagram of a geographic database, according to example embodiments). In one embodiment, the geographic database 117 includes geographic data 701 used for (or configured to be compiled to be used for) mapping and/or navigation-related services. In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 117.

"Node" - A point that terminates a link.

"Line segment" - A straight line connecting two points.

"Link" (or "edge") - A contiguous, non-branching string of one or more-line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 117 follows certain conventions. For example, links do not cross themselves and do not cross each other except at a node. Also, there are no duplicated shape points, nodes, or links. Two links that connect each other have a common node. In the geographic database 117, overlapping geographic features are represented by overlapping polygons. When polygons overlap, the boundary of one polygon crosses the boundary of the other polygon. In the geographic database 117, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 117 includes node data records 703, road segment or link data records 705, Point of Interest (POI) data records 707, augmented reality data records 709, other records 711, and indexes 713, for example. More, fewer, or different data records can be provided. In one embodiment, additional data records (not shown) can include cartographic ("carto") data records, routing data, and maneuver data. In one embodiment, the indexes 713 may improve the speed of data retrieval operations in the geographic database 117. In one embodiment, the indexes 713 may be used to quickly locate data without having to search every row in the geographic database 117 every time it is accessed. For example, in one embodiment, the indexes 713 can be a spatial index of the polygon points associated with stored feature polygons.

In exemplary embodiments, the road segment data records 705 are links or segments representing roads, streets, or paths, as can be used in the calculated route or recorded route information for determination of one or more personalized routes. The node data records 703 are end points corresponding to the respective links or segments of the road segment data records 705. The road link data records 705 and the node data records 703 represent a road network, such as used by vehicles, cars, and/or other entities. Alternatively, the geographic database 117 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 117 can include data about the POIs and their respective locations in the POI data records 707. The geographic database 117 can also include data about places, such as cities, towns, or other communities, and other geographic features, such as bodies of water, mountain ranges, etc. Such place or feature data can be part of the POI data records 707 or can be associated with POIs or POI data records 707 (such as a data point used for displaying or representing a position of a city).

In one embodiment, the geographic database 117 includes augmented reality data records 709 that stores pre-selected surface data, ranking criteria data, and/or the machine learning model specific for a user, and/or any other related data. In one embodiment, the augmented reality data records 709 can be associated with one or more of the node data records 703, road segment or link records 705, and/or POI data records 707; or portions thereof (e.g., smaller or different segments than indicated in the road segment records 705) to provide an AR overlay using pre-selected surfaces.

In one embodiment, the geographic database 117 can be maintained by the services platform 121 (e.g., a map developer). The map developer can collect geographic data to generate and enhance the geographic database 117. There can be different ways used by the map developer to collect data. These ways can include obtaining data from other sources, such as municipalities or respective geographic authorities. In addition, the map developer can employ field personnel to travel by vehicle along roads throughout the geographic region to observe features (e.g., road closures or other traffic incidents, etc.) and/or record information about them, for example. Also, remote sensing, such as aerial or satellite photography, can be used.

In one embodiment, the geographic database 117 include high resolution or high definition (HD) mapping data that provide centimeter-level or better accuracy of map features. For example, the geographic database 117 can be based on Light Detection and Ranging (LiDAR) or equivalent technology to collect billions of 3D points and model road surfaces and other map features down to the number lanes and their widths. In one embodiment, the HD mapping data capture and store details such as the slope and curvature of the road, lane markings, roadside objects such as signposts, including what the signage denotes. By way of example, the HD mapping data enable highly automated vehicles to precisely localize themselves on the road, and to determine road attributes (e.g., learned speed limit values) to at high accuracy levels.

In one embodiment, the geographic database 117 is stored as a hierarchical or multilevel tile-based projection or structure. More specifically, in one embodiment, the geographic database 117 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid in order to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

The geographic database 117 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle, a vehicle sensor and/or a UE 105. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing an AR overlay using pre-selected surfaces may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

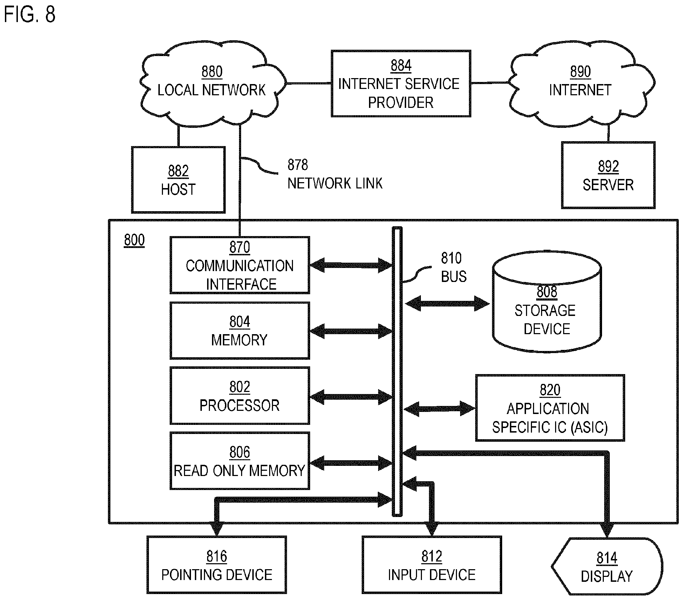

FIG. 8 illustrates a computer system 800 upon which an embodiment of the invention may be implemented. Computer system 800 is programmed (e.g., via computer program code or instructions) to provide an AR overlay using pre-selected surfaces as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to providing an AR overlay using pre-selected surfaces. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or other dynamic storage device, stores information including processor instructions for providing an AR overlay using pre-selected surfaces. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk, or flash card, for storing information, including instructions, that persists even when the computer system 800 is turned off or otherwise loses power.

Information, including instructions for providing an AR overlay using pre-selected surfaces, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT) or a liquid crystal display (LCD), or plasma screen or printer for presenting text or images, and a pointing device 816, such as a mouse or a trackball or cursor direction keys, or motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of application specific ICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners, and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic, or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 105 for providing an AR overlay using pre-selected surfaces to the UE 105.

The term computer-readable medium is used herein to refer to any medium that participates in providing information to processor 802, including instructions for execution. Such a medium may take many forms, including, but not limited to, non-volatile media, volatile media, and transmission media. Non-volatile media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system can be deployed in various configurations within other computer systems, e.g., host 882 and server 892.

FIG. 9 illustrates a chip set 900 upon which an embodiment of the invention may be implemented. Chip set 900 is programmed to provide an AR overlay using pre-selected surfaces as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide an AR overlay using pre-selected surfaces. The memory 905 also stores the data associated with or generated by the execution of the inventive steps.

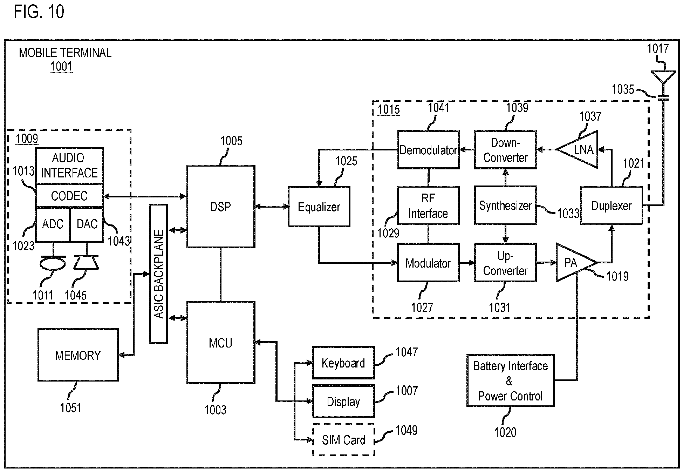

FIG. 10 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile station functions that offer automatic contact matching. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile station 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003-which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile station 1001 to provide an AR overlay using pre-selected surfaces. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the station. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile station 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1051 may be, but not limited to, a single memory, CD, DVD, ROM, RAM, EEPROM, optical storage, or any other non-volatile or non-transitory storage medium capable of storing digital data.

An optionally incorporated SIM card 1049 carries, for instance, important information, such as the cellular phone number, the carrier supplying service, subscription details, and security information. The SIM card 1049 serves primarily to identify the mobile station 1001 on a radio network. The card 1049 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:

   determining an input specifying pre-selection of a surface on which to present an augmented reality overlay, the augmented reality overlay including navigation guidance information;
   processing image data to identify one or more surface candidates, the one or more surface candidates being one or more instances of the surface depicted in the image data; and
   providing data for rendering the augmented reality overlay on at least one of the one or more surface candidates in a user interface displaying the image data, thereby presenting the navigation guidance information in accordance with the pre-selection of the surface.

2. The method of claim 1, further comprising:

   determining an optimal timing for the presentation of the augmented reality overlay based on a timing of the input, a travel speed, relevance of the at least one of the one or more surface candidates to the navigation guidance information, or a combination thereof; and

initiating the rendering of the augmented reality overlay on the at least one of the one or more surface candidates based on the optimal timing.

3. The method of claim 1, further comprising:

determining that the one or more surface candidates of the surface is not available in the image data; and selecting from one or more other surface candidates of a secondary surface that is depicted in the image data to present the navigation guidance information.

4. The method of claim 1, further comprising ranking the one or more candidate surfaces based on at least one of:

a proximity of the one or more candidate surfaces;
dimensions of the one or more candidates surfaces;
an angle of vision of the one or more candidate surfaces from a camera perspective of the image data;
a line of sight to the one or more candidate surfaces from the camera perspective of the image data;
one or more obstructions; or
an anticipated duration of a presentation of the augmented reality overlay,
wherein the at least one of the one or more surface candidates is selected to render the augmented reality overlay based on the ranking.

5. The method of claim 1, wherein the image data is captured during movement, the method further comprising: repeating the processing of the image data to identify the one or more surface candidates surfaces, the selecting of the at least one of the one or more surface candidates, or a combination thereof based on a designated frequency.

6. The method of claim 5, wherein the designated frequency is based on a travel speed, a detected context, or a combination thereof.

7. The method of claim 1, wherein a presentation of the augmented reality overlay on the at least one of the one or more surface candidates spans a designated duration based on a proximity trigger.

8. The method of claim 7, wherein the designated duration is based on a detected acknowledgement of the augmented reality overlay.

9. The method of claim 1, wherein the at least one of the one or more surface candidates is an anchor point for presenting the augmented reality overlay, and wherein the augmented reality overlay spans a plurality of surfaces with respect to the anchor point.

10. The method of claim 4, further comprising:

determining data indicating missed information from the augmented reality overlay rendered on the at least one of the one or more surface candidates,
wherein the at least one of the one or more surface candidates is re-selected based on the data indicating missed information.

11. The method of claim 1, wherein the rendering of the augmented reality overlay is a visual representation of the navigation guidance information anchored to the at least one of the one or more surface candidates, a spatial audio representation of the navigation guidance information originating from the at least one of the one or more surface candidates, or a combination thereof.

12. The method of claim 1, wherein the one or more candidate surfaces are identified based on an image segmentation performed by a computer vision system.

13. The method of claim 1, further comprising:
adapting a rendering characteristic of the augmented reality overlay based on the at least one of the one or more surface candidates.

14. An apparatus for providing a comparative analysis of a navigation route comprising:

at least one processor; and

at least one memory including computer program code for one or more programs,

the at least one memory and the computer program code configured to, with the at least one processor, cause the apparatus to perform at least the following,

determine an input specifying pre-selection of a surface on which to present an augmented reality overlay, the augmented reality overlay including navigation guidance information;

process image data to identify one or more surface candidates, the one or more surface candidates being one or more instances of the surface depicted in the image data; and

provide data for rendering the augmented reality overlay on at least one of the one or more surface candidates in a user interface displaying the image data, thereby presenting the navigation guidance information in accordance with the pre-selection of the surface.

15. A non-transitory computer-readable storage medium for providing a comparative analysis of a navigation route, carrying one or more sequences of one or more instructions which, when executed by one or more processors, cause an apparatus to at least perform the following steps:

determining an input specifying pre-selection of a surface on which to present an augmented reality overlay, the augmented reality overlay including navigation guidance information;

processing image data to identify one or more surface candidates, the one or more surface candidates being one or more instances of the surface depicted in the image data; and

providing data for rendering the augmented reality overlay on at least one of the one or more surface candidates in a user interface displaying the image data, thereby presenting the navigation guidance information in accordance with the pre-selection of the surface.

FIG. 1

AR USER INTERFACE 103

USER EQUIPMENT (UE) 105

SENSORS 111

AR APPLICATION 113

AR OVERLAY 101

GEOGRAPHIC DATABASE 117

AR PLATFORM 107

COMPUTER VISION SYSTEM 115

MACHINE LEARNING SYSTEM 119

COMMUNICATION NETWORK 109

CONTENT PROVIDER 125a

CONTENT PROVIDER 125m

SERVICES PLATFORM 121

SERVICE 123a

SERVICE 123n

26

FIG. 2

200

201 — USER SETS UP THE SYSTEM BY VOICE ASKING TO GET AR CUES ON "DOORS"

203 — USER STARTS NAVIGATION AND GETS INITIAL CUE OF WHERE TO GO

205 — WHEN USER NEEDS SOME FURTHER AR CUES, THE USER LOOKS ON THE PRE-SELECTED SURFACES

207

MESSAGE CAN ALSO BE SHOWN ACROSS MULTIPLE SURFACES IF NEEDED, TO MAINTAIN READABILITY, BUT SHOULD BE, AT LEAST IN PART, ON THE SELECTED SURFACE, INITIALLY AS ANCHOR POINT.

209 — IF NO SUCH SURFACE IS FOUND, THE SYSTEM FALLS BACK ON SECONDARY SURFACES OR ON AUDIO CUES OR ON STANDARD AR PROJECTION AHEAD OF THE USER

213

IF NOT SEEN OR ACKNOWLEDGED, THE SYSTEM TRIES NEW SURFACES OR SLIGHTLY MORE INTRUSIVE WAYS, UNTIL THE "MANEUVER THRESHOLD IS REACHED"

211 — SYSTEM DETECTS FROM USER GAZE THAT THE PROJECTED MESSAGE HAS BEEN ACKNOWLEDGED

FIG. 3

AR PLATFORM 107

| DATA PROCESSING MODULE 301 | RANKING MODULE 303 |
|---|---|

| AUGMENTED REALITY MODULE 305 | TRAINING MODULE 307 |

| OUTPUT MODULE 309 | COMPUTER VISION SYSTEM 115 |

| MACHINE LEARNING SYSTEM 119 |

GEOGRAPHIC DATABASE 117

FIG. 4

400

| 401 | PRE-SELECT A SURFACE TO PRESENT AN AUGMENTED REALITY OVERLAY |
| --- | --- |
| 403 | PROCESS IMAGE DATA TO IDENTIFY ONE OR MORE SURFACE CANDIDATES |
| 405 | PROVIDE DATA FOR RENDERING AUGMENTED REALITY OVERLAY ON AT LEAST ONE OF THE SURFACE CANDIDATES IN A USER INTERFACE DISPLAYING THE IMAGE DATA |

FIG. 5A

SELECT A SURFACE FOR
PROJECTING AR CUES

EITHER A BOX ON THE LIST OR AN OBJECT IN THE
IMAGE

WINDONWS

DOORS

BUILDING SURFACES

TREES

TRAFFIC SIGNS

PARKED CARS

BUSES

TRAMS

BILLBOARDS

ROAD ELEMENTS

LIGHTS

PEOPLE FACES

USER SHOES

CLOUDS/SKY

FIG. 5B

INSTANCE 511a        INSTANCE 511b        INSTANCE 511c

510

RANKING 513 = {#1: INSTANCE 511a, #2: INSTANCE 511c, #3: INSTANCE 511b}

520

OVERLAID
GUIDANCE
515

100m

## FIG. 5C

510b

OVERLAID
GUIDANCE
515

510a

100m

530

OVERLAID
GUIDANCE
515

100m

FIG. 5D

FIG. 6A

FIG. 6B

FIG. 6C

FIG. 7

GEOGRAPHIC
DATABASE 117

GEOGRAPHIC
DATA 701

NODE DATA
RECORDS
703

ROAD SEGMENT
DATA RECORDS
705

POI DATA RECORDS
707

AUGMENTED REALITY
DATA RECORDS 709

OTHER DATA RECORDS
711

INDEXES 713

FIG. 8

FIG. 9

900

PROCESSOR
903

DSP 907

ASIC 909

BUS 901

MEMORY 905

FIG. 10

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2020/118338 A1 (SONG SIYU [US] ET AL) 16 April 2020 (2020-04-16)<br>* paragraphs [0011], [0061], [0062], [0068] - [0071], [0075], [0078] - [0092] *<br>* figures 4-7 *<br>----- | 1-9, 11-15<br>10 | INV.<br>G06T19/00<br>G01C21/00 |
| X | US 10 488 215 B1 (YU CHEN-PING [US]) 26 November 2019 (2019-11-26)<br><br>* column 1, lines 24-47 *<br>* column 6, line 57 - column 8, line 57 *<br>* figure 2 *<br>----- | 1,2,5-7, 9,11,12, 14,15 | |

TECHNICAL FIELDS
SEARCHED (IPC)

G06T
G01C

The present search report has been drawn up for all claims

| Place of search | Date of completion of the search | Examiner |
|---|---|---|
| Berlin | 27 October 2021 | Kröner, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 8478

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2021

| Patent document cited in search report | | Publication date | Patent family member(s) | | Publication date |
|---|---|---|---|---|---|
| US 2020118338 | A1 | 16-04-2020 | NONE | | |
| US 10488215 | B1 | 26-11-2019 | US 10488215 | B1 | 26-11-2019 |
| | | | US 2020132490 | A1 | 30-04-2020 |
| | | | US 2020378779 | A1 | 03-12-2020 |

EPO FORM P0459

For more details about this annex : see Official Journal of the European Patent Office, No. 12/82

**EP 3 923 247 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63037372